# EUROPEAN PATENT APPLICATION

(11) **EP 4 354 924 A1**
(43) Date of publication of application: **17.04.2024**
(21) Application number: 22820040.8
(22) Date of filing: 24.05.2022
(51) Int. Cl.: H04W 12/06, H04W 76/15, H04W 84/12

(54) **COMMUNICATION DEVICE, COMMUNICATION METHOD, AND PROGRAM**

(30) Priority: 09.06.2021 JP 2021096514; 27.04.2022 JP 2022073891
(71) Applicant: Canon Kabushiki Kaisha, Tokyo 146-8501 (JP)
(72) Inventor: YOSHIKAWA Yuki, Tokyo 146-8501 (JP)
(74) Representative: Canon Europe Limited
(86) International application number: PCT/JP2022/021208
(87) International publication number: WO 2022/259858

(57) **Abstract**

A communication apparatus capable of performing authentication using a Wi-Fi Protected Access (WPA) 2 method and authentication using a WPA3 method performs the authentication using the WPA3 method based on a fact that communication with another communication apparatus is performed with a plurality of links established with the another communication apparatus.

## Description

### Technical Field

The present invention relates to transmission and reception of operating parameters in wireless communication.

### Background Art

Wireless local area network (LAN) techniques have been standardized by the Institute of Electrical and Electronics Engineers (IEEE) 802.11, which is a standardization organization for wireless LAN techniques. Among the standards for wireless LAN techniques are IEEE 802.11/a/b/g/n/ac/ax. Here, the IEEE is the abbreviation of the Institute of Electrical and Electronics Engineers.

IEEE 802.11ax discussed in Patent Literature 1 achieves improved communication speed in congested situations by orthogonal frequency-division multiple access (OFDMA), in addition to a high peak throughput of up to 9.6 gigabits per second (Gbps). OFDMA is the abbreviation of orthogonal frequency-division multiple access.

To further improve the throughput, a task group for developing the IEEE 802.1The standard as a successor to IEEE 802.11ax has been launched.

Meanwhile, Wi-Fi Alliance has been developing standards to guarantee mutual connection of wireless LAN techniques, and a more secure authentication program Wi-Fi Protected Access (WPA) 3 has been under standardization. WPA is the abbreviation of Wi-Fi Protected Access.

### Citation List

### Patent Literature

PTL 1: Japanese Patent Laid-Open No. 2018-50133

### Summary of Invention

### Technical Problem

Communication apparatuses that communicate using communication schemes defined in IEEE 802.11be are considered to support WPA3 authentication and encryption techniques. However, for the sake of mutual compatibility, authentication can also be performed by using conventionally prevalent authentication methods WPA and WPA2. There has thus been a security concern because communication can be performed by performing authentication and encryption using WPA or WPA2 even though authentication and encryption based on WPA3 that is an authentication method capable of more secure authentication and encryption are available.

In view of the foregoing, a communication apparatus according to the present invention is directed to improving security in performing communication compliant with the IEEE 802.11be standard with another communication apparatus.

### Solution to Problem

To accomplish the foregoing objective, a communication apparatus configured to perform authentication using a Wi-Fi Protected Access (WPA) 2 method and authentication using a WPA3 method, includes an establishment unit configured to establish a link between the communication apparatus and another communication apparatus via a frequency channel, and a control unit configured to control authentication for performing communication with the another communication apparatus. The control unit is configured to perform the authentication using the WPA3 method based on a fact that the communication with the another communication apparatus is performed with a plurality of links established between the communication apparatus and the another communication apparatus by the establishment unit.

A communication apparatus configured to perform authentication using a WPA2 method and authentication using a WPA3 method, the communication apparatus being configured to operate as a communication access point, includes a communication unit configured to perform communication with another communication apparatus configured to operate as a communication access point, and a control unit configured to control authentication of the communication with the another communication apparatus. The control unit is configured to perform the authentication using the WPA3 method based on a fact that the communication apparatus and the another communication apparatus operate collaboratively.

A communication apparatus configured to perform authentication using a WPA2 method and authentication using a WPA3 method, includes a communication unit configured to perform communication with another communication apparatus, and a control unit configured to control authentication of the communication with the another communication apparatus. The control unit is configured to, in a state where the communication apparatus is capable of performing communication compliant with a first communication scheme and a second communication scheme of an IEEE 802.11 standard series, perform the authentication using the WPA3 method based on a fact that the communication unit performs the communication compliant with the first communication scheme with the another communication apparatus.

A communication apparatus configured to perform authentication using a first security method and authentication using a second security method, includes an establishment unit configured to establish a link between the communication apparatus and another communication apparatus via a frequency channel, and a control unit configured to control authentication for performing communication with the another communication apparatus. The control unit is configured to perform the authentication using the second security method based on a fact that the communication with the another communication apparatus is performed with a plurality of links established between the communication apparatus and the another communication apparatus by the establishment unit, and perform the authentication using the first security method or the second security method based on a fact that the communication with the another communication apparatus is performed with a single link established between the communication apparatus and the another communication apparatus.

A communication apparatus configured to perform authentication using a first security method and authentication using a second security method, the communication apparatus being configured to operate as a communication access point, includes a communication unit configured to perform communication with another communication apparatus configured to operate as a communication access point, and a control unit configured to control authentication of the communication with the another communication apparatus. The control unit is configured to perform the authentication using the second security method based on a fact that the communication apparatus and the another communication apparatus operate collaboratively using the communication unit, and perform the authentication using the first security method or the second security method based on a fact that the communication apparatus and the another communication apparatus do not operate collaboratively.

A communication apparatus configured to perform authentication using a first security method and authentication using a second security method, includes a communication unit configured to perform communication with another communication apparatus, and a control unit configured to control authentication of the communication with the another communication apparatus. The control unit is configured to, in a state where the communication apparatus is capable of performing communication compliant with a first communication scheme and a second communication scheme of an IEEE 802.11 standard series, perform the authentication using the second security method based on a fact that the communication unit performs the communication compliant with the first communication scheme with the another communication apparatus, and perform the authentication using the first security method or the second security method based on a fact that the communication unit performs the communication compliant with the second communication scheme.

### Advantageous Effects of Invention

According to the present invention, security can be improved in performing communication compliant with the IEEE 802.11be standard with another communication apparatus.

### Brief Description of Drawings

[Fig. 1] Fig. 1 is a diagram illustrating a configuration of a network according to the present invention.
[Fig. 2] Fig. 2 is a diagram illustrating a hardware configuration of a communication apparatus according to the present invention.
[Fig. 3] Fig. 3 is a diagram illustrating a functional configuration of the communication apparatus according to the present invention.
[Fig. 4] Fig. 4 illustrates an example of an element representing a Robust Security Network element (RSNE) to be added based on a security method determined by the communication apparatus 101 according to the present invention.
[Fig. 5] Fig. 5 illustrates an example of an element representing Extended Capability to be added based on the security method determined by the communication apparatus 101 according to the present invention.
[Fig. 6] Fig. 6 illustrates an example of an element representing a RSN Extension element (RSNXE) to be added based on the security method determined by the communication apparatus 101 according to the present invention.
[Fig. 7] Fig. 7 is a flowchart illustrating processing through which the communication apparatus 101 according to the present invention determines the security method.
[Fig. 8] Fig. 8 illustrates an example of graphical user interface display according to the present invention.
[Fig. 9] Fig. 9 illustrates an example of graphical user interface display according to the present invention.
[Fig. 10] Fig. 10 illustrates an example of graphical user interface display according to the present invention.
[Fig. 11] Fig. 11 illustrates an example of graphical user interface display according to the present invention.
[Fig. 12] Fig. 12 illustrates an example of graphical user interface display according to the present invention.
[Fig. 13] Fig. 13 illustrates an example of graphical user interface display according to the present invention.
[Fig. 14] Fig. 14 illustrates an example of graphical user interface display according to the present invention.
[Fig. 15] Fig. 15 illustrates an example of graphical user interface display according to the present invention.
[Fig. 16] Fig. 16 illustrates an example of graphical user interface display according to the present invention.
[Fig. 17] Fig. 7 illustrates an example of graphical user interface display according to the present invention.
[Fig. 18] Fig. 18 illustrates an example of graphical user interface display according to the present invention.
[Fig. 19] Fig. 19 is a flowchart illustrating processing through which the communication apparatus 101 according to the present invention determines the security method.
[Fig. 20] Fig. 20 is a flowchart illustrating processing through which the communication apparatus 101 according to the present invention determines the security method.

### Description of Embodiments

Exemplary embodiments of the present invention will be described in detail below with reference to the attached drawings. Configurations described in the following exemplary embodiments are just examples, and the present invention is not limited to the illustrated configurations.

### (Configuration of Wireless Communication System)

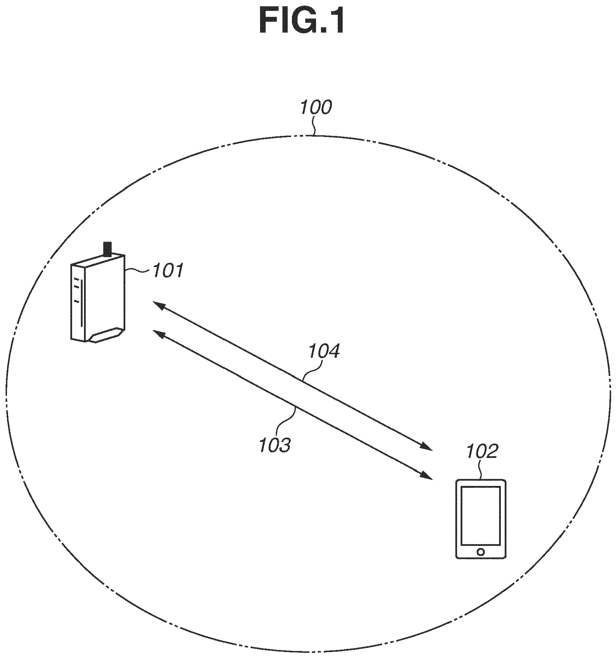

Fig. 1 illustrates a configuration of a network in which a communication apparatus 102 according to the present exemplary embodiment participates. The communication apparatus 102 is a station (STA) having the role of participating in a network 100. A communication apparatus 101 is an access point (AP) having the role of constructing the wireless network 100. The communication apparatus 101 is able to communicate with the communication apparatus 102. The present exemplary embodiment applies to the communication apparatus 101.

The communication apparatus 101 and the communication apparatus 102 are both able to perform wireless communication compliant with the Institute of Electrical and Electronics Engineers (IEEE) 802.11be (ETH) standard. The IEEE is the abbreviation of the Institute of Electrical and Electronics Engineers. The communication apparatuses 101 and 102 are able to perform multi-link communication where connections are established and communication is performed via a plurality of frequency channels in any of a plurality of frequency bands. The plurality of frequency bands refers to a sub-GHz band, 2.4-GHz band, 3.6-GHz band, 4.9- and 5-GHz bands, 60-GHz band, and 6-GHz band. The communication apparatus 101 and the communication apparatus 102 are able to communicate using bandwidths of 20 MHz, 40 MHz, 80 MHz, 160 MHz, and 320 MHz. The bandwidths to be used by the communication apparatuses are not limited thereto. For example, other bandwidths such as 240 MHz and 4 MHz may be used.

The communication apparatus 101 and the communication apparatus 102 are able to implement multi user (MU) communication where signals of a plurality of users are multiplexed by performing orthogonal frequency-division multiple access (OFDMA) communication compliant with the IEEE 802.11be standard. OFDMA is the abbreviation of orthogonal frequency division multiple access. In OFDMA communication, some of the divided frequency bands (resource units [RUs]) are assigned to each STA in a nonoverlapping manner so that the carriers of the respective STAs are orthogonal to each other. Thus, the AP is able to communicate with a plurality of STAs in parallel within a defined bandwidth.

While the communication apparatus 101 and the communication apparatus 102 have been described to support the IEEE 802.11be standard, legacy standards prior to the IEEE 802.11be standard may also be supported. Specifically, the communication apparatus 101 and the communication apparatus 102 may support at least one of the IEEE 802.11a/b/g/n/ac/ax standards. In addition to the IEEE 802.11 standard series, other communication standards such as Bluetooth^{®}, Near Field Communication (NFC), Ultra Wide Band (UWB), ZigBee, and Multi Band OFDM Alliance (MBOA) may be supported. UWB is the abbreviation of Ultra Wide Band, and MBOA is the abbreviation of Multi Band OFDM Alliance. NFC is the abbreviation of Near Field Communication. UWB includes Wireless Universal Serial Bus (USB), Wireless 1394, and WiNET. Wired communication standards such as a wired local area network (LAN) may be supported. Specific examples of the communication apparatus 101 may include, but not limited to, a wireless LAN router and a personal computer (PC). The communication apparatus 101 may be any communication apparatus that is able to perform wireless communication compliant with the IEEE 802.11be standard. Specific examples of the communication apparatus 102 may include, but not limited to, a camera, a tablet, a smartphone, a PC, a mobile phone, a video camera, and a headset. The communication apparatus 102 may be any communication apparatus that is able to perform wireless communication compliant with the IEEE 802.11be standard.

The communication apparatuses are able to communicate using bandwidths of 20 MHz, 40 MHz, 80 MHz, 160 MHz, and 320 MHz.

The communication apparatus 101 and the communication apparatus 102 perform multi-link communication where the communication apparatuses 101 and 102 establish links and communicate via a plurality of frequency channels. The IEEE 802.11 standard series defines frequency channels with a bandwidth of 20 MHz. As employed herein, a frequency channel refers to one defined in the IEEE 802.11 standard series. The IEEE 802.11 standard series defines a plurality of frequency channels in each of the 2.4-, 5-, 6-, and 60-GHz frequency bands. Adjoining frequency channels may be bonded to use a bandwidth of 40 MHz or more on a frequency channel. For example, the communication apparatus 101 is able to establish a link 103 via a first frequency channel in the 2.4-GHz band to communicate with the communication apparatus 102. The communication apparatus 102 is able to establish a link 104 via a second frequency channel in the 5-GHz to communicate with the communication apparatus 101 in parallel. In such a case, the communication apparatus 102 performs multi-link communication where the second link 104 via the second frequency channel is maintained in parallel with the link 103 via the first frequency channel. The communication apparatus 101 is able to improve the throughput of the communication with the communication apparatus 102 by thus establishing links via a plurality of frequency channels with the communication apparatus 102. In the present exemplary embodiment, the link 103 is 20-MHz connection on 6-ch in the 2.4-GHz band, with link number 1. The link 104 is 320-MHz connection on 113-ch in the 6-GHz band, with link number 2.

For example, the communication apparatus 101 and the communication apparatus 102 may establish a third link in the 5-GHz band in addition to the link 103 in the 2.4-GHz band and the second link 104 in the 6-GHz. Alternatively, the communication apparatuses 101 and 102 may establish links via a plurality of different channels included in the same frequency band. For example, with a 6-ch link in the 2.4-GHz band as a first link, a 1-ch link in the 2.4-GHz band may additionally be established as a second link. There may be links both in the same frequency band and in different frequency bands. For example, the communication apparatus 101 and the communication apparatus 102 may establish a 1-ch link in the 2.4-GHz band and a 149-ch link in the 5-GHz band in addition to a 6-ch link 103 in the 2.4-GHz. By establishing a plurality of connections at different frequencies with the communication apparatus 102, the communication apparatus 101 is able to prevent a drop in throughput and communication delays since communication is able to be established with the communication apparatus 102 in one band even if another band is congested.

While the wireless network 100 of Fig. 1 includes an AP and an STA, the numbers and arrangement of APs and STAs are not limited thereto. For example, an STA may be added to the wireless network of Fig. 1. Here, the frequency bands of the links, the number of links, and the frequency widths are not limited.

In performing multi-link communication, the communication apparatus 101 and the communication apparatus 102 divide a piece of data and transmits the divided pieces of data to the partner apparatuses via a plurality of links.

The communication apparatus 101 and the communication apparatus 102 may be capable of multiple-input and multiple-output (MIMO) communication. In such a case, the communication apparatus 101 and the communication apparatus 102 include a plurality of antennas, and one of the communication apparatuses transmits different signals from the respective antennas using the same frequency channel. The apparatus that is to receive the signals simultaneously receives all the signals arriving from the plurality of streams using the plurality of antennas, and separates and decodes the signals of the respective streams. By thus performing MIMO communication, the communication apparatus 101 and the communication apparatus 102 are able to communicate a large amount of data in the same time, as compared with a case without MIMO communication. In performing multi-link communication, the communication apparatus 101 and the communication apparatus 102 may perform MIMO communication on some of the links.

In the present exemplary embodiment, the communication apparatus 101 and the communication apparatus 102 support a Wi-Fi Protected Access (WPA) standard that is a security method, as well as WPA2 and WPA3 standards. WPA, WPA2, and WPA3 are standards for authenticating a counter apparatus and encrypting communication with the counter apparatus. Supporting the WPA3 standard, the communication apparatuses 101 and 102 are able to use Simultaneous Authentication of Equals (SAE) that is a method for sharing an encryption key in the WPA3 standard. Since interconnectivity with conventional communication apparatuses does not need to be taken into consideration in 6-GHz communication, the Wi-Fi Alliance defines that 6-GHz communication is authenticated and encrypted using WPA3. WPA3 uses not Temporal Key Integrity Protocol (TKIP) or Wired Equivalent Protocol (WEP) but the Advanced Encryption Standard (AES)-Counter Mode Cipher Block Chaining Message Authentication Code Protocol (CCMP) and AES-Galois/Counter Mode Protocol (GCMP) as the encryption methods.

### (Configuration of AP and STA)

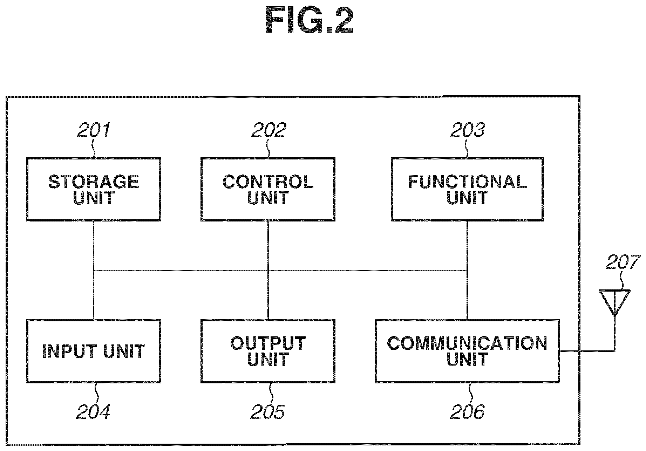

Fig. 2 illustrates a hardware configuration example of the communication apparatus 101 according to the present exemplary embodiment. The communication apparatus 101 includes a storage unit 201, a control unit 202, a functional unit 203, an input unit 204, an output unit 205, a communication unit 206, and an antenna 207. The communication apparatus 101 may include a plurality of antennas.

The storage unit 201 includes one or more memories such as a read-only memory (ROM) and a random access memory (RAM), and stores computer programs for performing various operations to be described below and various types of information such as communication parameters for wireless communication. ROM is the abbreviation of a read only memory, and RAM a random access memory. Aside from memories such as a ROM and a RAM, storage media such as a flexible disk, a hard disk, an optical disc, a magneto-optical disc, a compact disc read-only memory (CD-ROM), a compact disc recordable (CD-R), a magnetic tape, a nonvolatile memory card, and a Digital Versatile Disc (DVD) may be used as the storage unit 201. The storage unit 201 may include a plurality of memories.

The control unit 202 includes one or more processors such as a central processing unit (CPU) and a micro processing unit (MPU), for example, and controls the entire communication apparatus 101 by executing the computer programs stored in the storage unit 201. The control unit 202 may control the entire communication apparatus 101 through cooperation of the computer programs stored in the storage unit 201 and an operating system (OS). The control unit 202 generates data and signals (wireless frames) to be transmitted during communication with another communication apparatus. CPU is the abbreviation of a central processing unit, and MPU a micro processing unit. The control unit 202 may include a plurality of processors like a multicore processor, and the plurality of processors may control the entire communication apparatus 101.

The control unit 202 controls the functional unit 203 to perform predetermined processing such as wireless communication, imaging, printing, and projection. The functional unit 203 is hardware for the communication apparatus 101 to perform the predetermined processing.

The input unit 204 receives various operations from a user. The output unit 205 provides various outputs to the user via a monitor screen and a speaker. Examples of the output by the output unit 205 may include display on the monitor screen, sound output from the speaker, and vibration output. The input unit 204 and the output unit 205 may both be implemented by a single module like a touchscreen. The input unit 204 and the output unit 205 may each be integral with or separate from the communication apparatus 101.

The communication unit 206 controls wireless communication compliant with the IEEE 802.11be standard. Aside from the IEEE 802.11be standard, the communication unit 206 may control wireless communication compliant with other IEEE 802.11 standard series and/or wired communication such as a wired LAN. The communication unit 206 controls the antenna 207 to transmit and receive signals for wireless communication, generated by the control unit 202.

If the NFC standard and/or the Bluetooth standard is supported in addition to the IEEE 802.11be standard, the communication apparatus 101 may control wireless communication compliant with such communication standards. If the communication apparatus 101 is able to perform wireless communication compliant with a plurality of communication standards, communication units and antennas corresponding to the respective communication standards may individually be included. The communication apparatus 101 communicates data such as image data, document data, and video data with the communication apparatus 101 via the communication unit 206. The antenna 207 may be configured as a member separate from the communication unit 206, or integrated into a single module with the communication unit 206.

The antenna 207 is one capable of communication in the 2.4-, 5-, and 6-GHz bands. In the present exemplary embodiment, the communication apparatus 101 has been described to include an antenna, whereas three antennas may be included. Alternatively, the communication apparatus 101 may include different antennas for the respective frequency bands. If the communication apparatus 101 includes a plurality of antennas, communication units 206 corresponding to the respective antennas may be included.

The communication apparatus 102 has a hardware configuration similar to that of the communication apparatus 101.

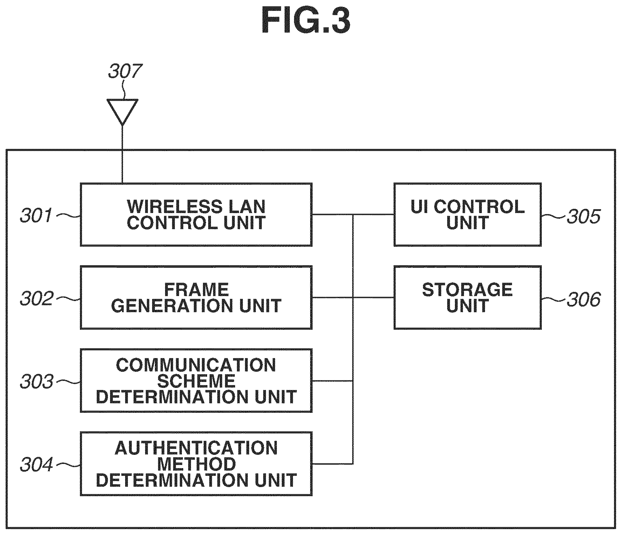

Fig. 3 illustrates a block diagram of a functional configuration of the communication apparatus 101 according to the present exemplary embodiment. The communication apparatus 102 has a similar configuration. Here, the communication apparatus 101 includes a wireless LAN control unit 301. While the number of wireless LAN control units in Fig. 3 is one, this is not restrictive. The communication apparatus 101 further includes a frame generation unit 302, a transmission time control unit 303, a beacon reception control unit 304, a user interface (UI) control unit 305, a storage unit 306, and a wireless antenna 307.

The wireless LAN control unit 301 includes an antenna and circuit for transmitting and receiving wireless signals to/from another wireless LAN apparatus, and programs for controlling the antenna and circuit. The wireless LAN control unit 301 performs wireless LAN communication control based on frames generated by the frame generation unit 302 in compliance with the IEEE 802.11 standard series.

The frame generation unit 302 generates wireless control frames for the wireless LAN control unit 301 to transmit. The content of the wireless control to be generated by the frame generation unit 302 may be limited based on settings stored in the storage unit 305. The content may be changed by user settings from the UI control unit 305. Information about the generated frames is transmitted to the wireless LAN control unit 301 and to the communication partner.

The communication scheme determination unit 303 determines a communication format to be used in communicating with the partner based on a reception frame received from the wireless LAN control unit 301 and setting information from the UI control unit 305. The communication scheme determination unit 303 notifies the authentication method determination unit 306 of the determined communication format. After the determination of the communication scheme, the wireless LAN control unit 301 communicates with the partner apparatus based on the determined communication scheme.

The authentication method determination unit 304 determines a method for authenticating the partner apparatus based on information from the communication scheme determination unit 303 and the setting information from the UI control unit 305. The wireless LAN control unit 301 authenticates the partner apparatus based on the determined authentication method.

The UI control unit 305 includes user interface-related hardware such as a touchscreen or buttons for receiving operations made by the not-illustrated user of the AP on the AP, and programs for controlling the hardware. The UI control unit 305 also has a function for presenting information to the user, such as displaying an image and outputting sound.

The storage unit 306 is a storage device that can include a ROM and a RAM for storing programs and data for the AP to operate with.

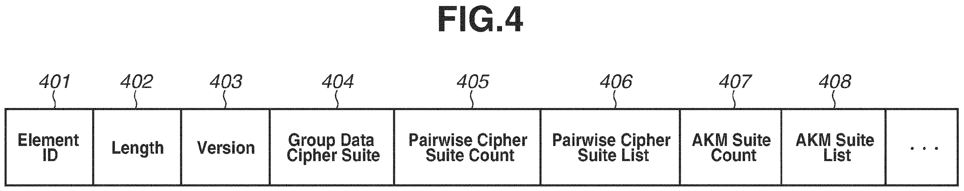

Fig. 4 is a Robust Security Network element (RSNE) defined in IEEE 802.11. The RSNE is stored in a management frame compliant with IEEE 802.11.

An Element Identifier (ID) field 401 indicates that the element is an RSNE. Specifically, the Element ID field 401 has a value of 48.

A Pairwise Cipher Suite Count field 405 indicates the number of encryption methods supported. A Pairwise Cipher Suite List field 406 indicates a specific value. For example, if CCMP-128 is supported, the Pairwise Cipher Suite List field 406 has a value of 00-0F-AC-04. If the Pairwise Cipher Suite Count field 405 indicates that a plurality of encryption methods is supported, for example, the Pairwise Cipher Suite Count field 405 is 2, a plurality of Pairwise Cipher Suite List fields 406 comes in succession. For example, if CCMP-128 and GCMP-128 are supported, 00-0F-AC-04 is followed by 00-0A-AC-08. The order may be reversed. Any number of encryption methods may be supported.

An Auth Key Management (AKM) Suite Count field 407 indicates the number of authentication methods supported. An AKM Suite List field 408 indicates a specific value. In the present exemplary embodiment, only WPA3-SAE is added to the RSNE. The AKM Suite Count field 407 is thus 1, and the AKM Suite List field 408 is 00-0F-AC-08 that represents SAE. The value is able to be one defined in WPA3 or later. Specifically, if an SAE authentication method with an SHA-384 hash is added to 00-0F-AC-14, the value may be listed in addition to the foregoing. Moreover, 00-0F-AC-09 for applying Fast Transition (FT) SAE may be included. Since FT SAE is supported only by WPA3, 00-0F-AC-02 or 00-0F-AC-06 representing PSK is not included.

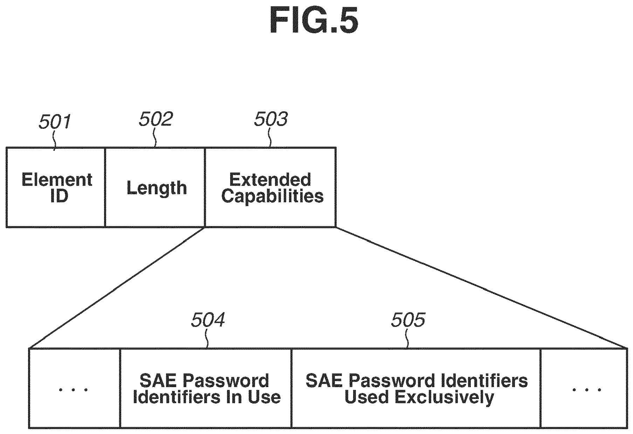

Fig. 5 illustrates Extended Capability defined in IEEE 802.11. Extended Capability is stored in a management frame compliant with IEEE 802.11.

The fields illustrated here are an Element ID field 501, a Length field 502, and an Extended Capabilities field 503 in order from the top.

The foregoing field 503 includes an SAE Password Identifiers In Use subfield 504 and an SAE Password Identifiers Used Exclusively subfield 505. These fields are enabled if password IDs capable of setting IDs for changing passwords user by user are used in constructing networks with the same service set identifier (SSID). For example, if some of the constructed networks have password IDs, the SAE Password Identifiers In Use subfield 504 is enabled. If all the constructed networks have password IDs, the subfield 504 and the subfield 505 are enabled.

The values stored in the subfields in the Extended Capabilities field 503 may be enabled, for example, when a multi-link communication network is constructed in addition to an existing network. For example, in connecting to a multi-link communication network, making a passowrd ID mandatory enables connection using a password ID-capable authentication method to be forced. A passowrd ID can be made mandatory, for example, by reserving a bit for requiring that capable devices always connect using a predetermined method, and setting the bit.

For example, in constructing a network using multi-link communication, the SAE Password Identifiers In Use subfield 504 may always be enabled. The use of password IDs can enhance password confidentiality for improved security. The AP can thus construct a more secure network by always enabling password IDs when using multi-link communication. Meanwhile, the STA is able to control disconnection from an AP constructing a multi-link communication network with the SAE Password Identifiers In Use disabled, because such an AP is unreliable. Moreover, the AP may control disconnection upon a connection request from an STA not supporting a password ID, because such an STA is unreliable.

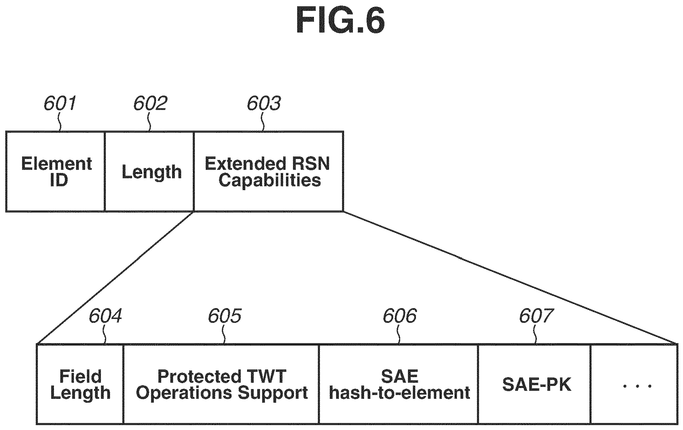

Fig. 6 illustrates an RSN Extension element (RSNXE) defined in IEEE 802.11. The RSNXE is stored in a management frame compliant with IEEE 802.11.

The fields illustrated here are an Element ID field 601, a Length field 602, and an Extended RSN Capabilities field 603 in order from the top.

An SAE hash-to-element subfield 606 indicates that a Hash to Element (H2E) method for SAE authentication defined in WPA3 is supported. An SAE-PK subfield 607 indicates that an SAE Public Key (SAE-PK) method for SAE authentication is supported.

SAE hash-to-element is one of the SAE authentication methods and can calculate parameters to be exchanged offline in advance. This enables prevention of side-channel attacks to infer calculations based on calculating time, thus enhancing the security.

The SAE has-to-element subfield 606 or the SAE-PK subfield 607 may therefore always be enabled in performing multi-link communication, for example. Always enabling SAE hash-to-element in using multi-link enables communication constructed on a more secure network. Meanwhile, the communication apparatus 102 is able to determine to not connect to an AP constructing a multi-link network with SAE hash-to-element disabled, because such an AP is unreliable. Moreover, the AP is able to determine to not connect upon a connection request from an STA not supporting SAE hash-to-element, because such an STA is unreliable.

SAE-PK is one of the SAE authentication methods and through which whether an STA is attempting connection to a legitimate AP is checked. If the AP to which the STA is attempting to establish connection is an unauthentic one, the STA is able to determine the AP to be unauthentic by verifying the value. This contributes to improved security on a public wireless LAN. The communication apparatus 102 is thus able to construct a more secure network by always enabling SAE-PK when using multi-link communication. On the contrary, the STA is able to determine to not connect to an AP constructing a multi-link communication network with SAE-PK disabled, because such an AP is unreliable. Moreover, the AP is able to determine to not connect upon a connection attempt by an STA not supporting SAE-PK, because such an STA is unreliable.

The AP and the STA may be connected if any one of the foregoing connection determination conditions, namely, a password ID, SAE hash-to-element, and SAE-PK is supported, and not connected if none is supported.

### (Processing Flow)

### (First Exemplary Embodiment)

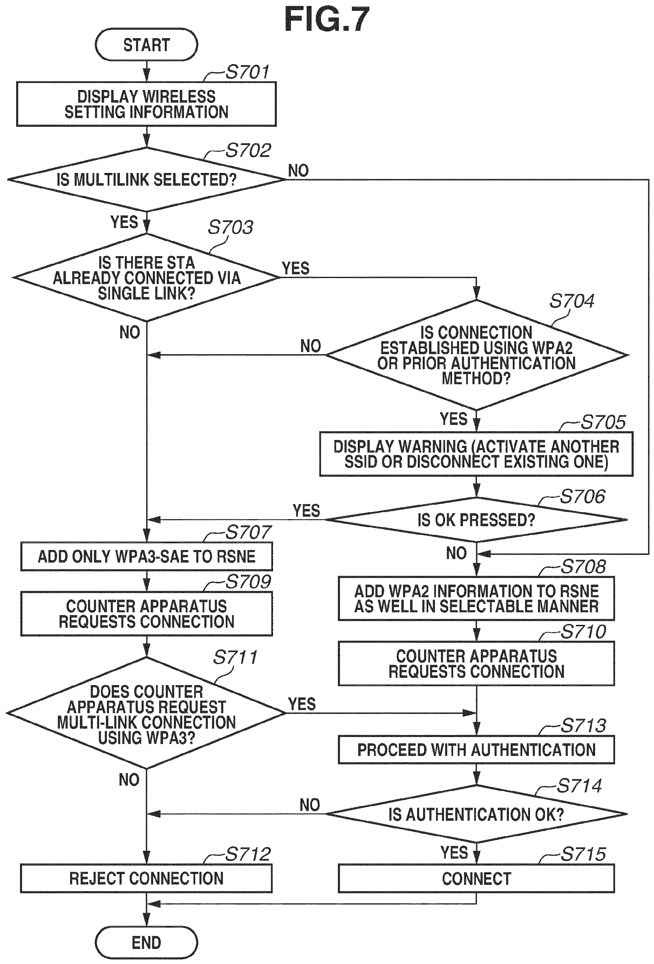

A processing flow where the communication apparatus 101 controls selection of WPA3 when multi-link communication is selected, by the control unit 202 executing a program stored in the storage unit 201 of the communication apparatus 101 will be described with reference to Fig. 7. Multi-link communication is a technique discussed in the IEEE 802.11be standard, and communication apparatuses capable of multi-link communication are likely to support WPA3. In performing multi-link communication, WPA3 capable of more secure authentication is therefore used for authentication. The communication apparatus 101 includes a wireless LAN control unit at least capable of multi-link communication.

This flowchart is started when the communication apparatus 101 constructs a network or when the user issues an instruction to change network settings.

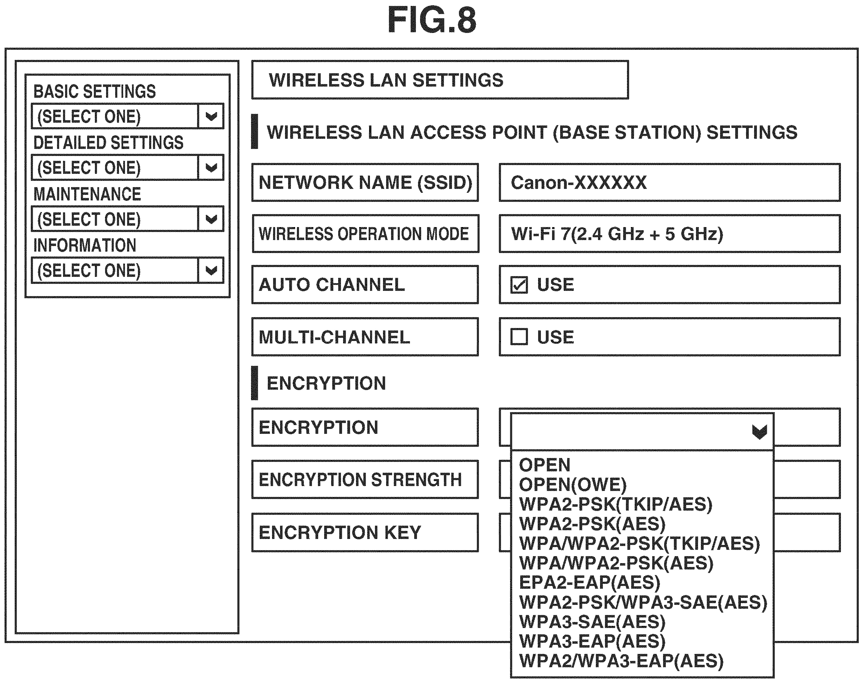

In step S701, the communication apparatus 101 initially displays a wireless setting screen to the user. Details of the screen displayed here will be described below. In step S702, the communication apparatus 101 determines whether multi-link communication is selected in an item for selecting multi-link communication. A method for determining whether multi-link communication is selected in step S702 will be described in conjunction with display examples illustrated in Figs. 8 to 18. If, in step S702, multi-link communication is determined to be selected, then in step S703, the communication apparatus 101 checks whether there is an STA that has already established connection with the communication apparatus 101 via a single link. If, in step S703, there is an STA that has established connection with the communication apparatus 101 via a single link, then in step S704, the communication apparatus 101 determines whether the connection with the STA is established by a WPA2 or prior authentication method. If, in step S704, the connection with the STA is established by a WPA2 or prior authentication method, and a multi-link network is constructed anew, authentication is performed using only WPA3. If the connection has been established using a WPA2 or prior authentication method, the existing STA therefore may be not reconnectable. In step S705, the communication apparatus 101 thus displays a warning to the user that the construction of a new network disconnects the connection with the existing STA and that the STA may be not reconnectable. Alternatively, the communication apparatus 101 notifies the user of construction of a multi-link network aside from the existing network. If the multi-link network is constructed aside from the existing network, the communication apparatus 101 desirably prompts the user to set an SSID or basic service set identifier (BSSID) different from that of the existing network. Specifically, the communication apparatus 101 may display a warning or control the a network construction button so as not to be pressed if the same value as the existing SSID is input to the SSID setting item.

If the user consents to the displayed warning (YES in step S706), then in step S707, the communication apparatus 101 approves the multi-link network construction setting and adds only WPA3-SAE to the AKM Suite List field 408 included in an RSNE in a Beacon, Probe Response, or Association Response. If the present invention is applied to the communication apparatus 102, WPA3-SAE is added to the AKM Suite List field 408 included in an RSNE in a Probe Request or Association Request.

In step S709, with a network authenticated and encrypted using WPA3-SAE established, the communication apparatus 101 waits until a connection request from the counter apparatus is received. Alternatively, if the present invention is applied to the communication apparatus 102, the communication apparatus 102 searches for a counter apparatus and transmits a connection request to one matching the condition. The connection request here refers to a Probe Request or Association Request compliant with the IEEE 802.11 standard.

When the connection request is received from the counter apparatus, then in step S711, the communication apparatus 101 checks whether the counter apparatus is in a state capable of multi-link communication and supports WPA3. Specifically, the communication apparatus 101 checks whether information indicating that WPA3 is supported is stored in the AKM Suite List field 408 of the Probe Request or Association Request received in step S709.

If the counter apparatus is not in the state capable of multi-link communication or does not request the communication using WPA3, then in step S712, the communication apparatus 101 rejects the connection. In step S712, the communication apparatus 101 may not only reject the connection but recommend another network as well.

Alternatively, if, in step S712, the counter apparatus is not in the state capable of multi-link communication, that is, the connection is established via a single link, the processing may proceed to authentication of the connection request using WPA2. If a passowrd ID, SAE hash-to-element, and/or SAE-PK are mandatory for multi-link communication connection as described above, such items may be added here as connection-approving conditions in addition to the determination on WPA3. If the present invention is applied to the communication apparatus 102, the communication apparatus 102 transmits the connection request to only an AP constructing a network satisfying the foregoing in searching for an AP.

If the connection request from the STA satisfies the condition, then in step S713, the communication apparatus 101 performs authentication on the STA. If the authentication in step S713 is successful (YES in step S714), then in step S715, the communication apparatus 101 connects to the counter apparatus and starts communication. If the authentication is not successful (NO in step S714), then in step S712, the communication apparatus 101 rejects the connection. In step S712, the communication apparatus 101 can reject the connection by setting a Status Code in an Association Response to a failure.

If multi-link communication is not selected in step S702 or if construction of a network using multi-link communication is selected and the user does not approve as a result of a warning display in step S706, then in step S708, the communication apparatus 101 enables connections using WPA2 and WPA3.

In step S708, the communication apparatus 101 includes 00-0F-AC-02 and 00-0F-AC-06 indicating that PSK is supported into the AKM Suite List field 408 of the RSNE illustrated in Fig. 4, aside from 00-0F-AC-08 indicating that SAE is supported. Here, 00-0F-AC-02 indicates that PSK uses a hash function SHA-128, and 00-0F-AC-06 indicates that PSK uses a hash function SHA-256. Either one of the values may be included alone.

In step S710, after the construction of the network, the communication apparatus 101 waits for a connection request from the counter apparatus. If the counter apparatus requests connection, then in step S713, the communication apparatus 101 proceeds with authentication. If the authentication is successful (Yes in step S714), then in step S715, the communication apparatus 101 establishes the connection and starts communication. If the authentication is failed (NO in step S714), then in step S712, the communication apparatus 101 rejects the connection.

According to the present exemplary embodiment, if multi-link connection is selected, high security strength is able to be maintained by performing control so that authentication is not performed using authentication methods other than WPA3.

### (Display Example 1)

Fig. 8 illustrates an example of screen display of authentication methods and encryption methods to be displayed when multi-link communication is selected.

If a multi-channel field illustrated in Fig. 8 is checked, it means that a network is constructed using multi-link communication. If the multi-channel field is not checked, it means that a network is not constructed using multi-link communication.

Fig. 8 illustrates a display screen in a case where the multi-channel field is not checked, more specifically, where multi-link communication is not performed. Since the communication apparatus illustrated in Fig. 8 does not perform multi-link communication, a plurality of authentication and encryption methods including WPA2 and OPEN are able to be selected as security methods. Details are illustrated in Fig. 8. Depending on the authentication methods supported by the model, some of the authentication methods displayed may be hidden. Options such as SAE-PK and SAE hash-to-element may additionally be included. EAP may be displayed as Enterprise instead, and notations (TKIP/AES) and (AES) may be omitted. WPA2-PSK/WPA3-SAE may be displayed differently. For example, WPA2/WPA3 or WPA2/PA3-Personal may be displayed. Similarly, WPA3-SAE may be displayed as WPA3, WPA3-Personal, or WPA3-SAE (Personal).

OPEN (Opportunistic Wireless Encryption [OWE]) in Fig. 8 may be displayed differently. For example, OPEN (ASE), OWE, and WPA/WPA2-PSK may be displayed as MIX. WPA/WPA2/WPA3 may be displayed. WPA/WPA2/WPA3 may be displayed as WPA-MIX. OWE is one of the security methods and enables the user to perform encrypted communication without entering a password in situations where a public wireless LAN or the like is used. OWE is thus able to enhance security compared to OPEN without communication encryption.

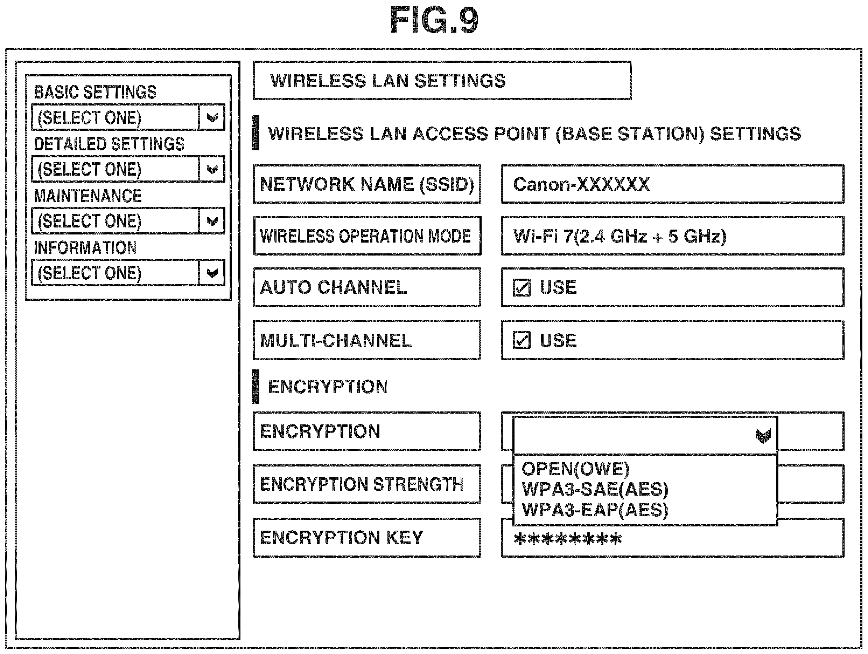

Fig. 9 illustrates an example of screen display of authentication methods and encryption methods to be displayed when multi-link communication is selected. If the multi-channel field illustrated in Fig. 9 is checked, it means that a network is constructed using multi-link communication. If the multi-channel field is not checked, it means a network is not constructed using multi-link communication.

In constructing a network using multi-link communication, only WPA3 and OWE are made selectable without displaying WPA2 or OPEN as a security method.

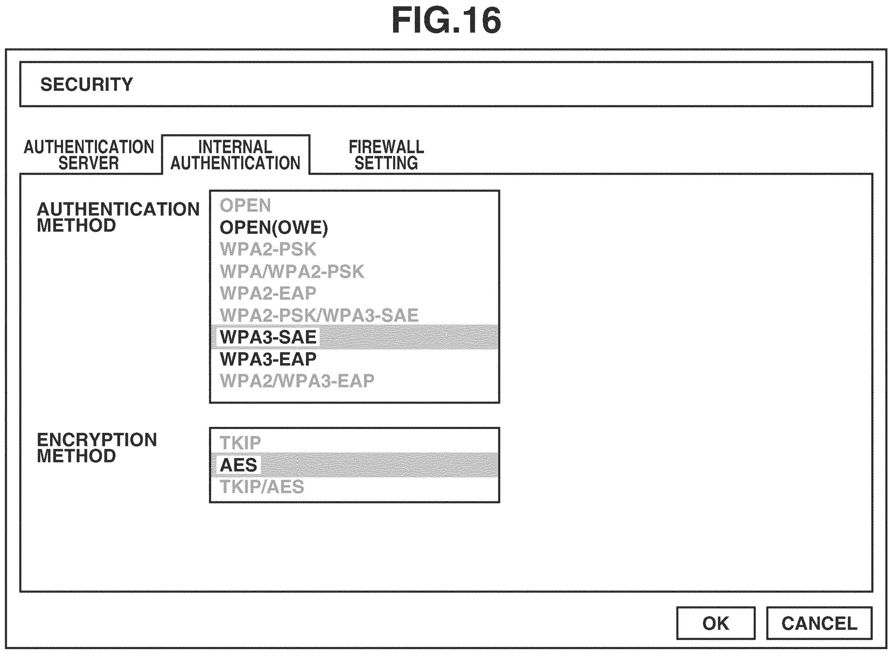

As illustrated in Fig. 16, if multi-link communication is selected, WPA2 and OPEN may be grayed out and made not-selectable instead of performing control so that neither WPA2 nor OPEN is displayed.

In addition to OPEN and WPA3 displayed in Fig. 9, SAE-PK and SAE hash-to-element may be displayed.

If the multi-channel field is not checked, authentication using WPA2 is completed, and communication is underway, the display may be switched to that illustrated in Fig. 9 upon selection of multi-link communication.

The encryption methods displayed here may be combined with examples demonstrated by other display examples to be described below. The encryption items may be expressed in different words. Examples may include an authentication method, a security method, and an encryption mode.

As for the display of the wireless authentication method, if the user attempts to set, for example, WPA2-PSK for multi-link, an error may be displayed to notify that such a setting is not available.

### (Display Example 2)

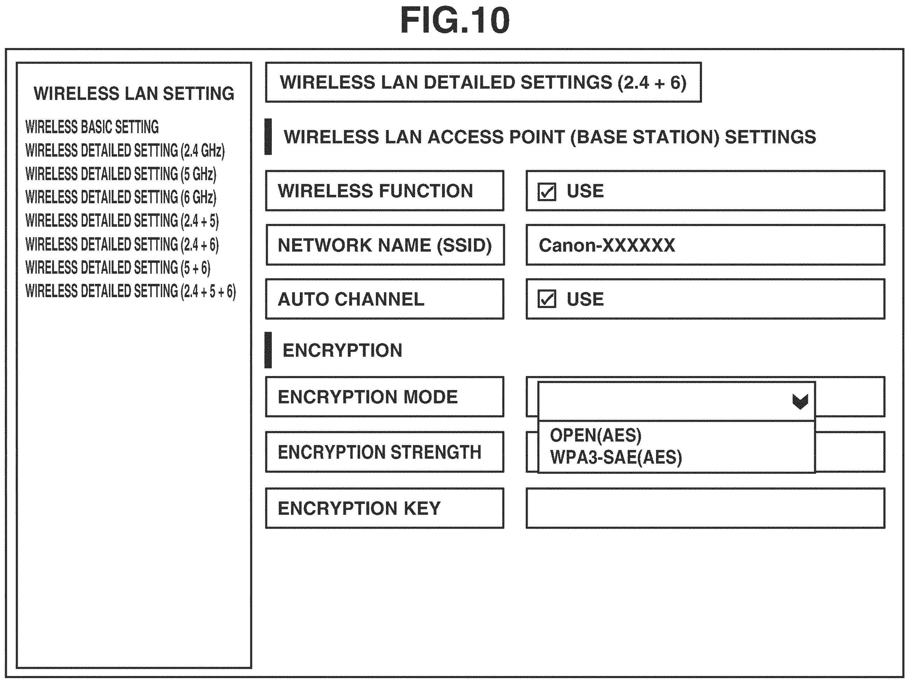

Fig. 10 illustrates an example of screen display of authentication methods and encryption methods to be displayed in constructing a network using multi-link communication. If a wireless LAN detailed setting (2.4 + 6) is selected, it means that a network is constructed with 2.4- and 6-GHz multi-links. In such a case, as illustrated in Fig. 10, only OWE and WPA3 are displayed to perform control so that authentication using an authentication method prior to WPA3 is not performed.

### (Display Example 3)

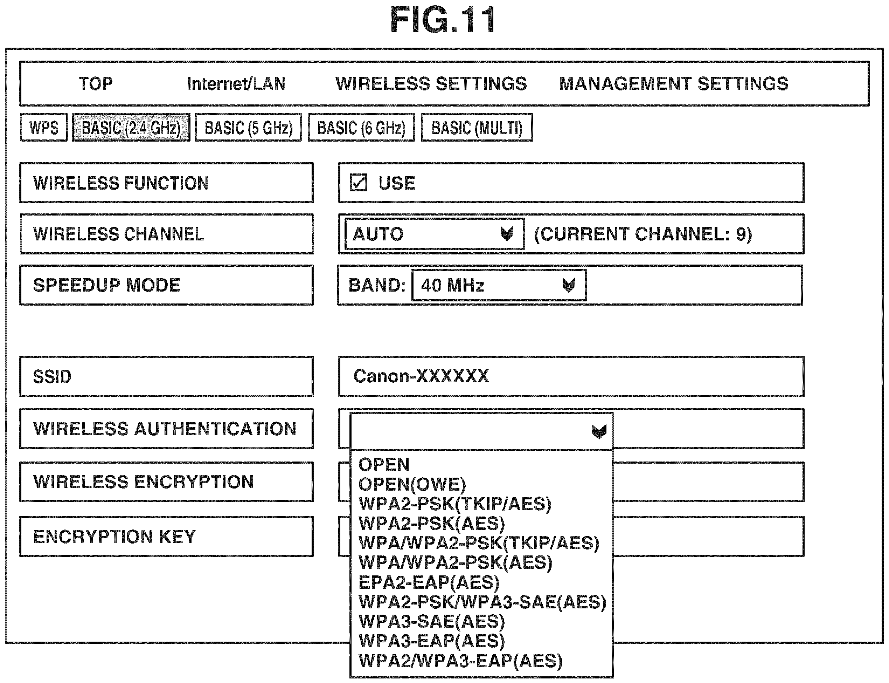

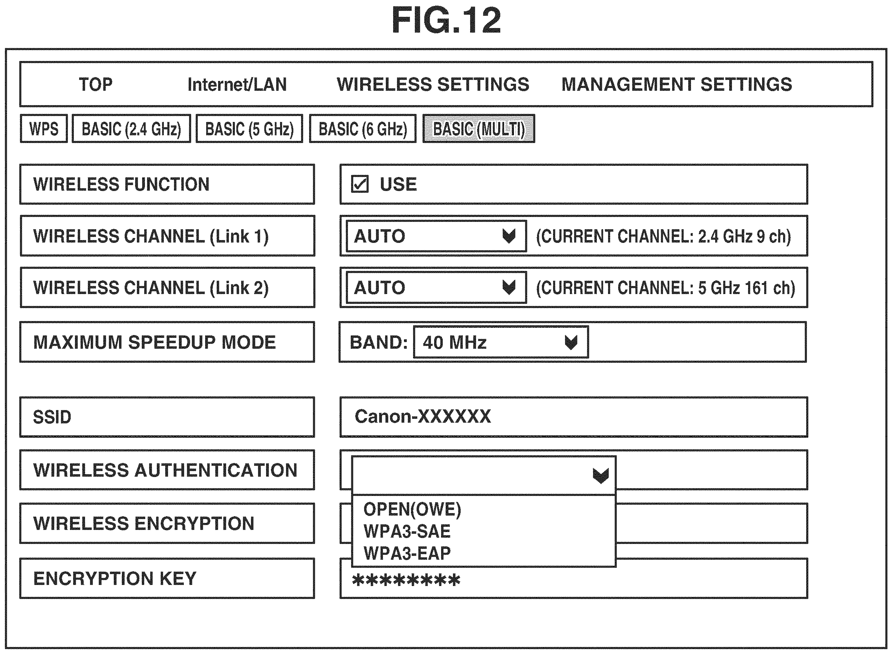

Figs. 11 and 12 illustrate UI examples where a multi-link network is constructed and the frequency bands of the links to be constructed are not limited to one link for each frequency band.

Fig. 11 illustrates an example of screen display in a case where 2.4 GHz is selected. In the example illustrated in Fig. 11, multi-link communication is not selected and a plurality of encryption methods including WPA2 and OPEN is displayable as security methods.

Fig. 12 illustrates an example of screen display in a case where basic (multi) is selected. The example illustrated in Fig. 12 means that a network using multi-links is to be constructed. In the example illustrated in Fig. 12, multi-link communication is selected, and WPA2 and OPEN that are authentication methods prior to WPA3 are not displayed. Note that two channels used to perform multi-link communication may be selected from 6 GHz, for example. A channel may be selected from 2.4 GHz, and two from 5 GHz. Specific authentication methods and encryption methods are similar to those of Fig. 8.

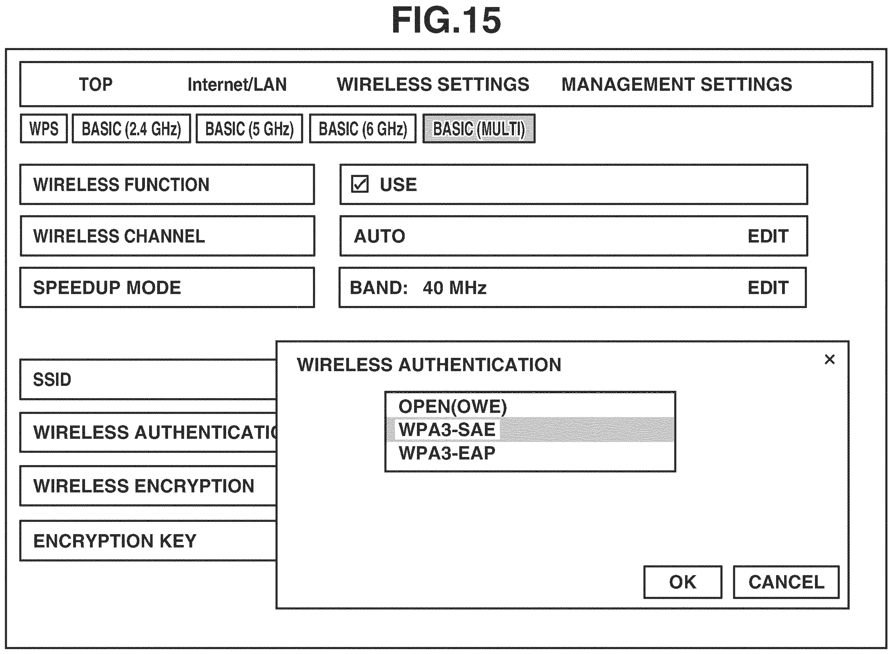

Fig. 15 illustrates an example where a pop-out is displayed in selecting a security method. A method for selecting multi-link communication is similar to that of Fig. 12. In selecting a security method, the options may be popped out as illustrated in Fig. 15.

### (Display Example 4)

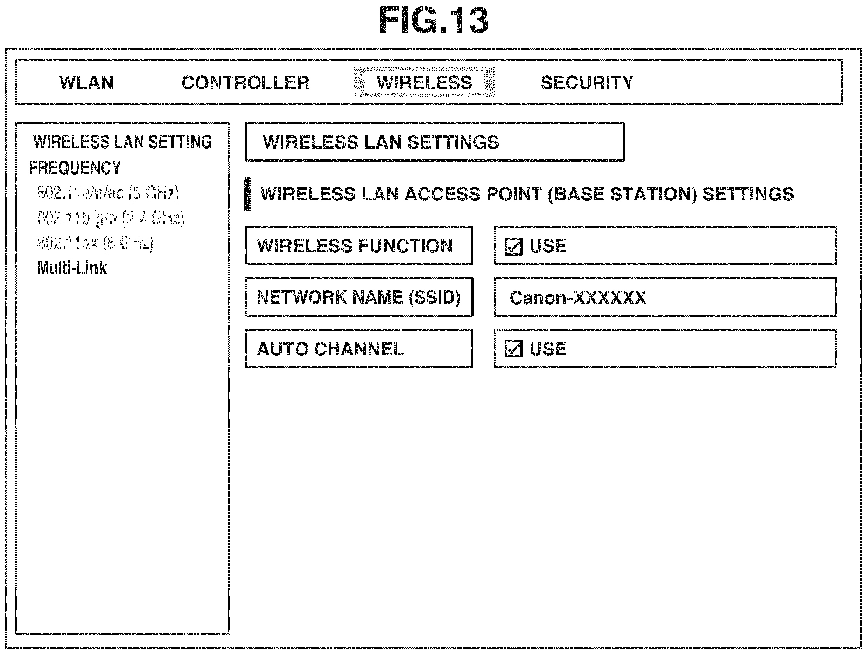

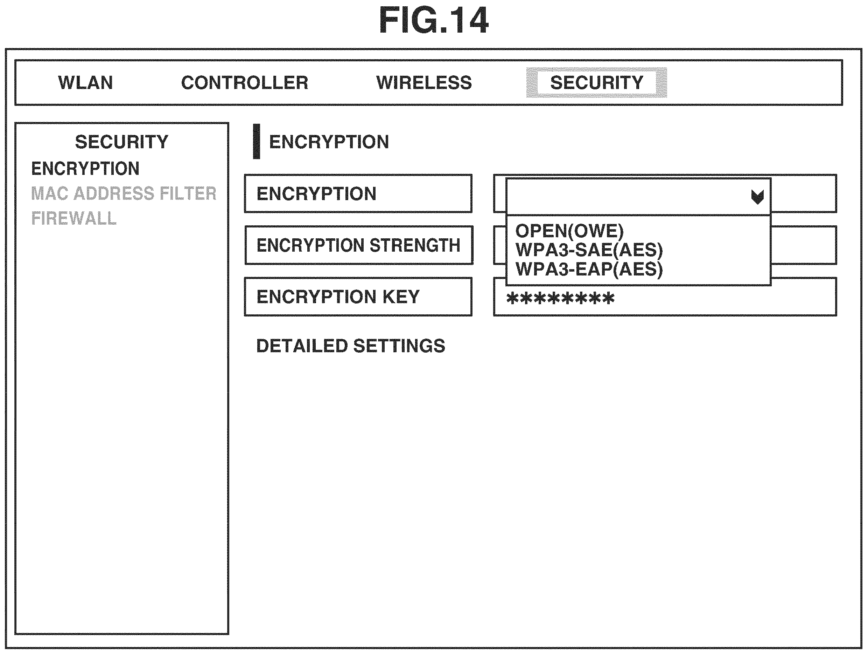

Figs. 13 and 14 illustrate an example where a screen for selecting multi-link communication and a screen for making security settings are separately displayed.

Fig. 13 illustrates an example of a setting screen for determining a communication scheme.

Here, a checkmark placed on a use wireless LAN function on a multi-link setting screen of the wireless LAN setting indicates that multi-link communication is selected. Fig. 14 illustrates an example where the screen has transitioned to one for selecting a security method with multi-link communication selected. The security setting screen of Fig. 14 displays WPA3 and OWE without displaying WPA2 and OPEN that are authentication methods prior to WPA3, since multi-link communication is selected. Specific authentication methods and encryption methods are similar to those of Fig. 9. If multi-link communication is not selected in Fig. 13, authentication methods and encryption methods illustrated in Fig. 8 are displayed in Fig. 14.

### (Display Example 5)

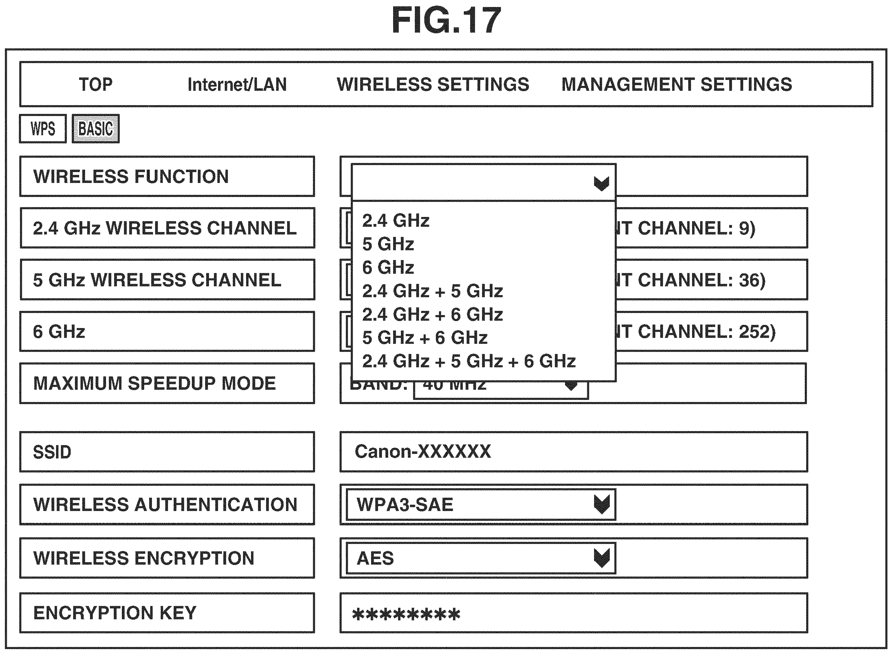

Fig. 17 illustrates an example of screen display of authentication methods and encryption methods in a case where a network using multi-link communication is constructed. For example, if 2.4 GHz is selected in the wireless function, options including WPA2 and OPEN are presented in the security method, in addition to WPA3. By contrast, if, for example, 2.4 GHz + 5 GHz is selected, multi-link communication is determined to be used and options not including WPA2 or OPEN are presented.

### (Display Example 6)

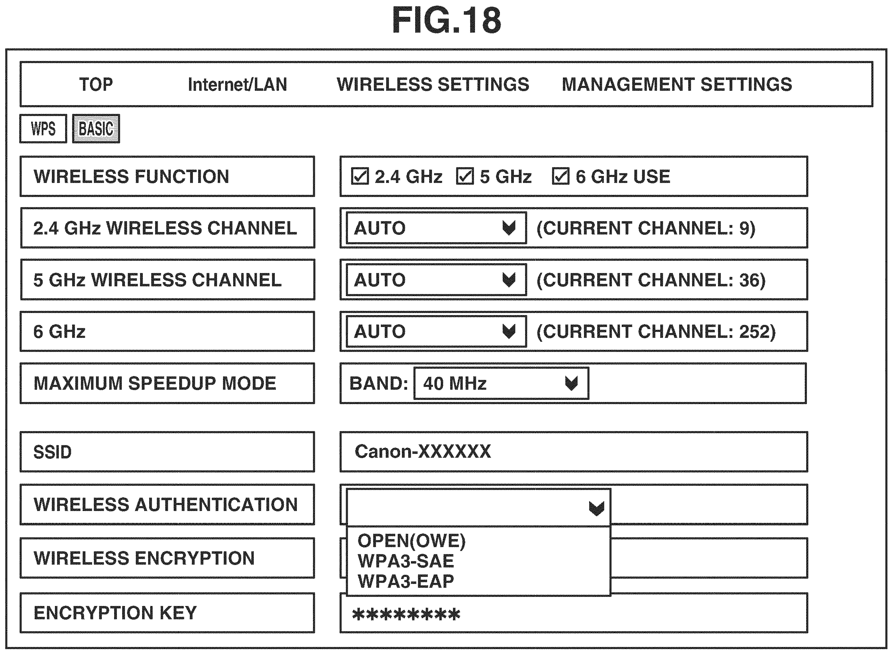

Fig. 18 illustrates an example of a case where whether multi-link communication is selected is determined based on the number of frequency bands selected.

For example, if only 2.4 GHz is checked in the wireless function of Fig. 18, multi-link communication is determined to not be selected and a plurality of encryption methods including WPA and OPEN is displayed as security methods. On the other hand, if, for example, at least two frequency bands are checked in the wireless function of Fig. 18, multi-link communication is determined to be selected and only OWE and WPA3 are displayed as security methods.

Security can be improved by thus limiting the user-selectable security methods to only WPA3 depending on whether multi-link communication is selected.

If multi-link communication is selected on the UI, the options to be displayed as the security methods may be left unchanged and the communication apparatus may automatically switch the security methods when actually constructing the network. For example, suppose that a plurality of networks is simultaneously constructed, and WPA2/3 is selected as the security method. A network not using multi-link communication may operate with WPA2/3 while a network using multi-link communication operates with only WPA3. In such a case, the option of sole WPA2 may be excluded when multi-link communication is selected. The option of sole WPA2 may be made not-selectable in any network. Even in such a case, connection using a high-security method is guaranteed when multi-link communication is used.

### (Second Exemplary Embodiment)

The present exemplary embodiment deals with a processing flow for performing control so that only WPA3 is selected as the security method when multi-AP communication is selected by a wireless setting.

Multi-AP communication refers to a technique where a plurality of APs operates collaboratively to perform data communication with an STA, thereby enabling improved communication rate and improved communication performance such as a reduction in radio interference using beamforming. The APs participating in multi-AP communication are classified into a master AP that manages the other APs and slave APs that operate under the management of the master AP.

Multi-AP communication is a technique discussed in the IEEE 802.11be standard, and communication apparatuses capable of multi-AP communication are likely to support WPA3. In performing multi-AP communication, WPA3 capable of more secure authentication is thus used for authentication. If multi-AP communication is not performed, an authentication method such as WPA2 and OPEN or WPA3 is used to perform authentication as in the first exemplary embodiment.

In the description of the present exemplary embodiment, what has been described in the foregoing exemplary embodiment will be omitted.

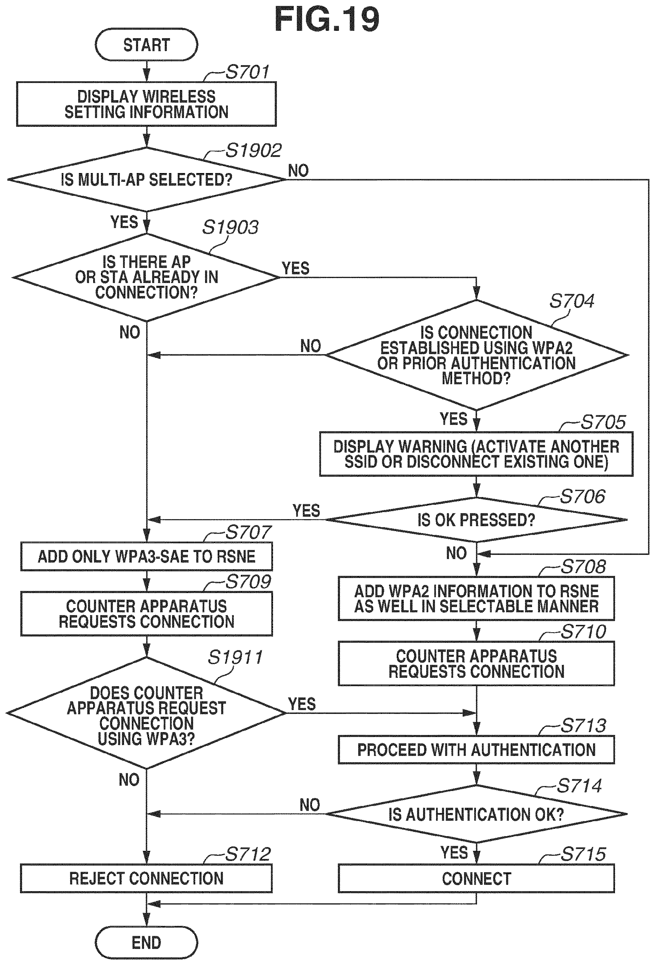

Fig. 19 illustrates a processing flow for performing control so that only WPA3 is selected as a security method in a case where multi-AP communication is selected, by the control unit 202 executing a program stored in the storage unit 201 of the communication apparatus 101.

The communication apparatus 101 includes a wireless LAN control unit at least capable of multi-AP communication.

The flowchart of Fig. 19 is started when the communication apparatus 101 constructs a network or when the user issues an instruction to change network settings.

Most of the processing overlaps that of Fig. 7 according to the first exemplary embodiment. A description thereof will thus be omitted.

In step S1902, the communication apparatus 101, after wireless display, checks whether multi-AP communication is selected. If multi-AP communication is selected, the processing proceeds to step S1903. If not, the processing proceeds to step S708 of Fig. 7.

In step S1903, the communication apparatus 101 determines whether there is an STA or AP that has already participated in a network in constructing the network using multi-AP communication. If there is determined to be a communication apparatus that has already established connection in step S1903, the processing proceeds to step S704 in Fig. 4. If there is determined to be no such communication apparatus in step S1903, the processing proceeds to step S707 in Fig. 4.

In step S1911, the communication apparatus 101 determines whether the STA requesting connection of the network constructed by multi-AP communication transmits the connection request using WPA3. If, in step S1911, the connection request is determined to be transmitted using WPA3, then in step S713, the communication apparatus 101 proceeds with authentication. If, in step S1911, the connection request is determined to not be transmitted using WPA3, then in step S712, the communication apparatus 101 rejects the connection. SAE-PK or SAE hash-to-element may be used instead of WPA3. Alternatively, as in the first exemplary embodiment, the determination may be made based on a connection request using a passowrd ID.

The counter apparatus transmitting the connection request in step S1911 may be an AP. In constructing a network of a plurality of APs by multi-AP communication, connections may be controlled to only WPA3.

AUI display method for performing control so that only WPA3 is selected and a method for presenting the elements indicating that only WPA3 is supported are similar to those of the first exemplary embodiment. A description thereof will thus be omitted.

According to the present exemplary embodiment, the user-selectable security methods are limited to WPA3 in constructing a network capable of multi-AP communication, thus improving security.

### (Third Exemplary Embodiment)

The present exemplary embodiment deals with a processing flow for performing control so that only WPA3 is selected in performing communication compliant with the IEEE 802.11be standard.

Communication apparatuses capable of communication compliant with the IEEE 802.11be standard are likely to support WPA3. In performing communication compliant with the IEEE 802.11be standard, WPA3 capable of more secure authentication is therefore used for authentication. If communication compliant with the IEEE 802.11be standard is not performed, authentication is performed using a WPA2 or prior authentication method or WPA3 as in the first exemplary embodiment.

In the description of the present exemplary embodiment, what has been described in the foregoing exemplary embodiments will be omitted.

Fig. 19 illustrates a processing flow for performing control so that only WPA3 is selected when communication compliant with the IEEE 802.11be standard is selected, by the control unit 202 executing a program stored in the storage unit 201 of the communication apparatus 101.

The communication apparatus 101 includes a wireless LAN control unit at least capable of communication compliant with the IEEE 802.11be standard.

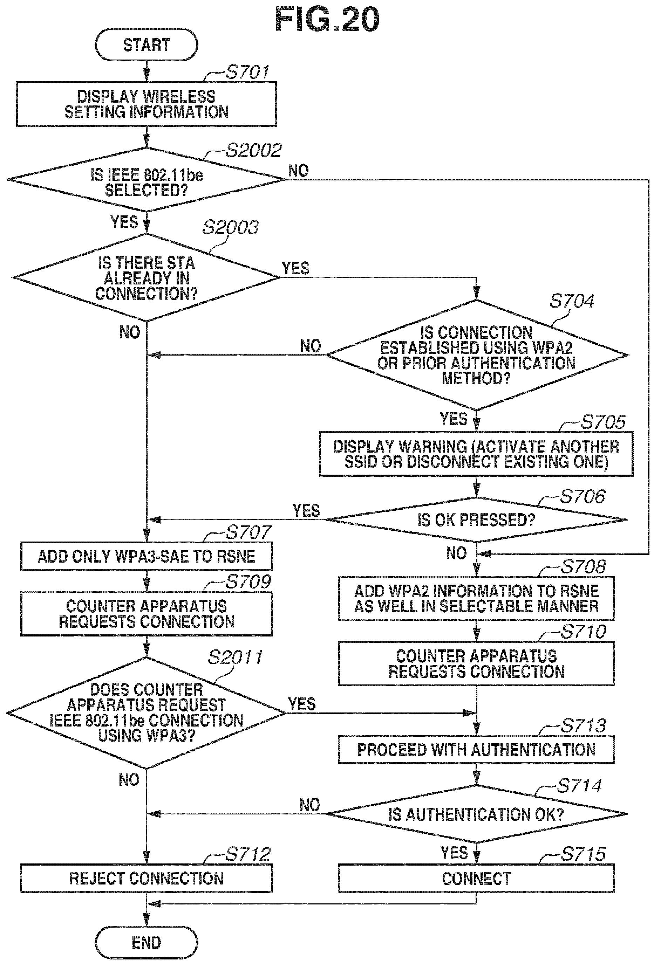

The flowchart of Fig. 20 is started when the communication apparatus 101 constructs a network or the user issues an instruction to change network settings.

Most of the processing overlaps that of the first and second exemplary embodiments. A description thereof will thus be omitted.

In step S2002, the communication apparatus 101, after wireless display, determines whether IEEE 802.11be is selected. Examples of situations where IEEE 802.11be is determined to not be selected in step S2002 include when a legacy standard such as IEEE 802.11ax is selected.

If, in step S2002, communication compliant with the IEEE 802.11be standard is determined to be performed, then in step S2003, the communication apparatus 101 determines whether there is an STA or AP that has already participated in the network. If there is determined to be an STA or AP that has already established connection in step S2003, the processing proceeds to step S704 of Fig. 7. If there is determined to be no such STAs or APs in step S2003, the processing proceeds to step S707 of Fig. 7.

In step S2011, the communication apparatus 101 determines whether the STA requesting connection of the network constructed by IEEE 802.11be transmits the connection request using WPA3. If, in step S2011, the connection request is determined to be transmitted using WPA3, then in step S713, the communication apparatus 101 proceeds with authentication. If, in step S2011, the connection request is determined to not be transmitted using WPA3, then in step S712, the communication apparatus 101 rejects the connection. Like the first exemplary embodiment, SAE-PK or SAE hash-to-element may be used instead of WPA3. Alternatively, the determination may be made based on a connection request using a passowrd ID.

The counter apparatus transmitting the connection request in step S2011 may be an AP. For example, in constructing a network of a plurality of APs or a mesh network, connections may be limited to only those using WPA3.

AUI display method for performing control so that only WPA3 is selected and a method for presenting the elements indicating that only WPA3 is supported are similar to those of the first exemplary embodiment. A description thereof will thus be omitted.

According to the present exemplary embodiment, security is able to be improved by limiting the user-selectable security methods to WPA3 in performing communication compliant with the IEEE 802.11be standard.

### (Other Exemplary Embodiments)

The methods for setting the communication schemes and security methods in the exemplary embodiments are screen-based ones. However, this is not restrictive. For example, settings may be made by voice input. Alternatively, settings may be made by command input using character strings. In the case of command input, for example, an error may be displayed to indicate that the settings are unable to be made when the user attempts to set only WPA2 despite multi-link.

In the exemplary embodiments, an error is described to be displayed when the user selects an option that is not selectable. Beep sound may be output as well.

The communication apparatuses 101 and 102 described in the present exemplary embodiment may be printers including a printing unit. When operating as printers, the communication apparatuses 101 and 102 are able to print data obtained by communicating with the counterpart apparatuses, for example.

The communication apparatuses 101 and 102 described in the present exemplary embodiment may be cameras including an imaging unit. When operating as cameras, the communication apparatuses 101 and 102 are able to transmit captured data by communicating with the counterpart apparatuses, for example.

While the present exemplary embodiment has been described in conjunction with WPA3, the present exemplary embodiment is also applicable when WPA4 and the like are standardized as successors to WPA3 in the future.

A recording medium on which software program code for implementing the foregoing functions is recorded may be supplied to a system or an apparatus, and a computer (CPU or MPU) of the system or apparatus may read the program code stored in the recording medium and execute the program code. In such a case, the program code itself read from the storage medium implements the functions of the foregoing exemplary embodiments, and the storage medium storing the program code constitutes the foregoing apparatuses.

Examples of the storage medium for supplying the program code may include a flexible disk, a hard disk, an optical disc, a magneto-optical disc, a CD-ROM, a CD-R, a magnetic tape, a nonvolatile memory card, a ROM, and a DVD.

The foregoing functions may be implemented not only by a computer executing the read program code, but by an OS running on the computer performing part or all of the actual processing based on instructions of the program code. OS is the abbreviation of an operating system.

Moreover, the program code read from the storage medium may be written to a memory included in a function expansion board inserted into the computer or a function expansion unit connected to the computer. The foregoing functions may be implemented by a CPU included in the function expansion board or function expansion unit performing some or all of the actual processing based on instructions of the program code.

The present invention can also be implemented by processing for supplying a program for implementing one or more functions of the foregoing exemplary embodiments to a system or an apparatus via a network or a storage medium, and reading and executing the program by one or more processors in a computer of the system or apparatus. A circuit for implementing one or more functions (for example, an application-specific integrated circuit [ASIC]) may be used for implementation.

The disclosure of the present exemplary embodiment includes the following configurations.

### (Configuration 1)

A communication apparatus configured to perform authentication using a Wi-Fi Protected Access (WPA) 2 method and authentication using a WPA3 method, the communication apparatus includes an establishment unit configured to establish a link between the communication apparatus and another communication apparatus via a frequency channel, and a control unit configured to control authentication for performing communication with the another communication apparatus, wherein the control unit is configured to perform the authentication using the WPA3 method based on a fact that the communication with the another communication apparatus is performed with a plurality of links established between the communication apparatus and the another communication apparatus by the establishment unit.

### (Configuration 2)

The communication apparatus according to Configuration 1, further including a reception unit configured to receive an instruction to perform the communication with the another communication apparatus with the plurality of links established between the communication apparatus and the another communication apparatus, wherein a display unit is controlled so that the authentication is performed using the WPA3 method based on issuance of an instruction by the reception unit to perform the communication with the another communication apparatus with the plurality of links established between the communication apparatus and the another communication apparatus.

### (Configuration 3)

The communication apparatus according to Configuration 1 or 2, wherein the communication that is performed with the another communication apparatus with the plurality of links established between the communication apparatus and the another communication apparatus by the establishment unit is multi-link communication compliant with an IEEE 802.11 standard series.

### (Configuration 4)

A communication apparatus configured to perform authentication using a WPA2 method and authentication using a WPA3 method, the communication apparatus being configured to operate as a communication access point, the communication apparatus including a communication unit configured to perform communication with another communication apparatus configured to operate as a communication access point, and a control unit configured to control authentication of the communication with the another communication apparatus, wherein the control unit is configured to perform the authentication using the WPA3 method based on a fact that the communication apparatus and the another communication apparatus operate collaboratively.

### (Configuration 5)

The communication apparatus according to Configuration 4, further including a reception unit configured to receive an instruction to perform collaborate operation between the communication apparatus and the another communication apparatus, wherein a display unit is controlled so that the authentication using the WPA3 method is performed based on issuance of an instruction by the reception unit to perform the collaborate operation between the communication apparatus and the another communication apparatus.

### (Configuration 6)

The communication apparatus according to Configuration 4 or 5, wherein the communication performed by the communication unit so that the communication apparatus and the another communication apparatus operate collaboratively is multi-access point (AP) communication compliant with an IEEE 802.11 standard series.

### (Configuration 7)

A communication apparatus configured to perform authentication using a WPA2 method and authentication using a WPA3 method, the communication apparatus including a communication unit configured to perform communication with another communication apparatus, and a control unit configured to control authentication of the communication with the another communication apparatus, wherein the control unit is configured to, in a state where the communication apparatus is capable of performing communication compliant with a first communication scheme and a second communication scheme of an IEEE 802.11 standard series, perform the authentication using the WPA3 method based on a fact that the communication unit performs the communication compliant with the first communication scheme with the another communication apparatus.

### (Configuration 8)

The communication apparatus according to Configuration 7, further including a reception unit configured to receive an instruction to perform the communication compliant with the first communication scheme or the second communication scheme, wherein a display unit is controlled so that the authentication using the WPA3 method is performed based on issuance of an instruction by the reception unit to perform the communication compliant with the first communication scheme.

### (Configuration 9)

The communication apparatus according to Configuration 7 or 8, wherein the first communication scheme is an IEEE 802.11be standard in the IEEE 802.11 standard series.

### (Configuration 10)

The communication apparatus according to any one of Configurations 1 to 9, wherein the communication apparatus is configured to receive a frame containing information indicating that the authentication is performed using the WPA3 method from the another communication apparatus.

### (Configuration 11)

The communication apparatus according to any one of Configurations 1 to 9, wherein the communication apparatus is configured to, in a case where a frame containing information indicating that the authentication is performed using the WPA3 method is not received from the another communication apparatus, perform control so that no connection is established with the another communication apparatus.

### (Configuration 12)

A communication apparatus configured to perform authentication using a first security method and authentication using a second security method, the communication apparatus including an establishment unit configured to establish a link between the communication apparatus and another communication apparatus via a frequency channel, and a control unit configured to control authentication for performing communication with the another communication apparatus, wherein the control unit is configured to perform the authentication using the second security method based on a fact that the communication with the another communication apparatus is performed with a plurality of links established between the communication apparatus and the another communication apparatus by the establishment unit, and perform the authentication using the first security method or the second security method based on a fact that the communication with the another communication apparatus is performed with a single link established between the communication apparatus and the another communication apparatus.

### (Configuration 13)

The communication apparatus according to Configuration 12, further including a reception unit configured to receive an instruction to perform the communication with the another communication apparatus with the plurality of links established between the communication apparatus and the another communication apparatus, wherein a display unit is controlled so that the authentication using the second security method is performed based on issuance of an instruction by the reception unit to perform the communication with the another communication apparatus with the plurality of links established between the communication apparatus and the another communication apparatus, and so that the authentication is performed using the first security method or the second security method based on a fact that the communication with the another communication apparatus is performed with a single link established between the communication apparatus and the another communication apparatus.

### (Configuration 14)

The communication apparatus according to Configuration 12 or 13, wherein the communication that is performed with the another communication apparatus with the plurality of links established between the communication apparatus and the another communication apparatus by the establishment unit is multi-link communication compliant with an IEEE 802.11 standard series.

### (Configuration 15)

A communication apparatus configured to perform authentication using a first security method and authentication using a second security method, the communication apparatus being configured to operate as a communication access point, the communication apparatus including a communication unit configured to perform communication with another communication apparatus configured to operate as a communication access point, and a control unit configured to control authentication of the communication with the another communication apparatus, wherein the control unit is configured to perform the authentication using the second security method based on a fact that the communication apparatus and the another communication apparatus operate collaboratively using the communication unit, and perform the authentication using the first security method or the second security method based on a fact that the communication apparatus and the another communication apparatus do not operate collaboratively.

### (Configuration 16)

The communication apparatus according to Configuration 15, further including a reception unit configured to receive an instruction to perform collaborate operation between the communication apparatus and another communication apparatus, wherein the authentication using the second security method is performed based on issuance of an instruction by the reception unit to perform the collaborate operation between the communication apparatus and the another communication apparatus, and the authentication is performed using the first security method or the second security method based on issuance of an instruction to not perform the collaborate operation between the communication apparatus and the another communication apparatus.

### (Configuration 17)

The communication apparatus according to Configuration 15 or 16, wherein the communication that is performed by the communication unit so that the another communication apparatus and the communication apparatus operate collaboratively is multi-AP communication compliant with an IEEE 802.11 standard series.

### (Configuration 18)

A communication apparatus configured to perform authentication using a first security method and authentication using a second security method, the communication apparatus including a communication unit configured to perform communication with another communication apparatus, and a control unit configured to control authentication of the communication with the another communication apparatus, wherein the control unit is configured to, in a state where the communication apparatus is capable of performing communication compliant with a first communication scheme and a second communication scheme of an IEEE 802.11 standard series, perform the authentication using the second security method based on a fact that the communication unit performs the communication compliant with the first communication scheme with another communication apparatus, and perform the authentication using the first security method based on a fact that the communication unit performs the communication compliant with the second communication scheme.

### (Configuration 19)

The communication apparatus according to Configuration 18, further including a reception unit configured to receive an instruction to perform the communication compliant with the first communication scheme or the second communication scheme, wherein a display unit is controlled so that the authentication using the second security method is performed based on issuance of an instruction by the reception unit to perform the communication compliant with the first communication scheme, and so that the authentication using the first security method or the second security method is performed based on issuance of an instruction to perform the communication compliant with the second communication scheme.

### (Configuration 20)

The communication apparatus according to Configuration 18 or 19, wherein the first communication scheme is an IEEE 802.11be standard in the IEEE 802.11 standard series.

### (Configuration 21)

The communication apparatus according to any one of Configuration 12 to 20, wherein the communication apparatus is configured to receive a frame containing information indicating that the authentication is performed using the second security method from the another communication apparatus.

### (Configuration 22)

The communication apparatus according to any one of Configuration 12 to 20, wherein the communication apparatus is configured to, in a case where a frame containing information indicating that the authentication is performed using the second security method is not received from the another communication apparatus, perform control so that no connection is established with the another communication apparatus.

### (Configuration 23)

The communication apparatus according to any one of Configuration 12 to 22, wherein the first security method is WPA or WPA2, and the second security method is WPA3.

### (Configuration 24)

A program for causing a computer to function as the units of the communication apparatus according to any one of Configurations 1 to 23.

The present invention is not limited to the foregoing exemplary embodiments, and various changes and modifications is able to be made without departing from the spirit and scope of the present invention. The following claims are therefore attached to make the scope of the present invention public.

The present invention claims the benefit of priority based on Japanese Patent Application No. 2021-096514 filed on June 9, 2021 and Japanese Patent Application No. 2022-073891 filed on April 27, 2022, the entire contents of which are incorporated herein by reference.

## Claims

1. A communication apparatus configured to perform authentication using a Wi-Fi Protected Access (WPA) 2 method and authentication using a WPA3 method, the communication apparatus comprising:
an establishment unit configured to establish a link between the communication apparatus and another communication apparatus via a frequency channel; and
a control unit configured to control authentication for performing communication with the another communication apparatus,
wherein the control unit is configured to perform the authentication using the WPA3 method based on a fact that the communication with the another communication apparatus is performed with a plurality of links established between the communication apparatus and the another communication apparatus by the establishment unit.

2. The communication apparatus according to Claim 1, further comprising a reception unit configured to receive an instruction to perform the communication with the another communication apparatus with the plurality of links established between the communication apparatus and the another communication apparatus,
wherein a display unit is controlled so that the authentication is performed using the WPA3 method based on issuance of an instruction by the reception unit to perform the communication with the another communication apparatus with the plurality of links established between the communication apparatus and the another communication apparatus.

3. The communication apparatus according to Claim 1 or 2, wherein the communication that is performed with the another communication apparatus with the plurality of links established between the communication apparatus and the another communication apparatus by the establishment unit is multi-link communication compliant with an Institute of Electrical and Electronics Engineers (IEEE) 802.11 standard series.

4. A communication apparatus configured to perform authentication using a WPA2 method and authentication using a WPA3 method, the communication apparatus being configured to operate as a communication access point, the communication apparatus comprising:
a communication unit configured to perform communication with another communication apparatus configured to operate as a communication access point; and
a control unit configured to control authentication of the communication with the another communication apparatus,
wherein the control unit is configured to perform the authentication using the WPA3 method based on a fact that the communication apparatus and the another communication apparatus operate collaboratively.

5. The communication apparatus according to Claim 4, further comprising a reception unit configured to receive an instruction to perform collaborate operation between the communication apparatus and the another communication apparatus,
wherein a display unit is controlled so that the authentication using the WPA3 method is performed based on issuance of an instruction by the reception unit to perform the collaborate operation between the communication apparatus and the another communication apparatus.

6. The communication apparatus according to Claim 4 or 5, wherein the communication performed by the communication unit so that the communication apparatus and the another communication apparatus operate collaboratively is multi-access point (AP) communication compliant with an IEEE 802.11 standard series.

7. A communication apparatus configured to perform authentication using a WPA2 method and authentication using a WPA3 method, the communication apparatus comprising:
a communication unit configured to perform communication with another communication apparatus; and
a control unit configured to control authentication of the communication with the another communication apparatus,
wherein the control unit is configured to, in a state where the communication apparatus is capable of performing communication compliant with a first communication scheme and a second communication scheme of an IEEE 802.11 standard series, perform the authentication using the WPA3 method based on a fact that the communication unit performs the communication compliant with the first communication scheme with the another communication apparatus.

8. The communication apparatus according to Claim 7, further comprising a reception unit configured to receive an instruction to perform the communication compliant with the first communication scheme or the second communication scheme,
wherein a display unit is controlled so that the authentication using the WPA3 method is performed based on issuance of an instruction by the reception unit to perform the communication compliant with the first communication scheme.

9. The communication apparatus according to Claim 7 or 8, wherein the first communication scheme is an IEEE 802.11be standard in the IEEE 802.11 standard series.

10. The communication apparatus according to Claim 1, 4, or 7, wherein the communication apparatus is configured to receive a frame containing information indicating that the authentication is performed using the WPA3 method from the another communication apparatus.

11. The communication apparatus according to Claim 1, 4, or 7, wherein the communication apparatus is configured to, in a case where a frame containing information indicating that the authentication is performed using the WPA3 method is not received from the another communication apparatus, perform control so that no connection is established with the another communication apparatus.

12. A communication apparatus configured to perform authentication using a first security method and authentication using a second security method, the communication apparatus comprising:
an establishment unit configured to establish a link between the communication apparatus and another communication apparatus via a frequency channel; and
a control unit configured to control authentication for performing communication with the another communication apparatus,
wherein the control unit is configured to perform the authentication using the second security method based on a fact that the communication with the another communication apparatus is performed with a plurality of links established between the communication apparatus and the another communication apparatus by the establishment unit, and perform the authentication using the first security method or the second security method based on a fact that the communication with the another communication apparatus is performed with a single link established between the communication apparatus and the another communication apparatus.

13. The communication apparatus according to Claim 12, further comprising a reception unit configured to receive an instruction to perform the communication with the another communication apparatus with the plurality of links established between the communication apparatus and the another communication apparatus,
wherein a display unit is controlled so that the authentication using the second security method is performed based on issuance of an instruction by the reception unit to perform the communication with the another communication apparatus with the plurality of links established between the communication apparatus and the another communication apparatus, and so that the authentication is performed using the first security method or the second security method based on a fact that the communication with the another communication apparatus is performed with a single link established between the communication apparatus and the another communication apparatus.

14. The communication apparatus according to Claim 12 or 13, wherein the communication that is performed with the another communication apparatus with the plurality of links established between the communication apparatus and the another communication apparatus by the establishment unit is multi-link communication compliant with an IEEE 802.11 standard series.

15. A communication apparatus configured to perform authentication using a first security method and authentication using a second security method, the communication apparatus being configured to operate as a communication access point, the communication apparatus comprising:
a communication unit configured to perform communication with another communication apparatus configured to operate as a communication access point; and
a control unit configured to control authentication of the communication with the another communication apparatus,
wherein the control unit is configured to perform the authentication using the second security method based on a fact that the communication apparatus and the another communication apparatus operate collaboratively using the communication unit, and perform the authentication using the first security method or the second security method based on a fact that the communication apparatus and the another communication apparatus do not operate collaboratively.

16. The communication apparatus according to Claim 15, further comprising a reception unit configured to receive an instruction to perform collaborate operation between the communication apparatus and another communication apparatus,
wherein the authentication using the second security method is performed based on issuance of an instruction by the reception unit to perform the collaborate operation between the communication apparatus and the another communication apparatus, and the authentication is performed using the first security method or the second security method based on issuance of an instruction to not perform the collaborate operation between the communication apparatus and the another communication apparatus.

17. The communication apparatus according to Claim 15 or 16, wherein the communication that is performed by the communication unit so that the another communication apparatus and the communication apparatus operate collaboratively is multi-AP communication compliant with an IEEE 802.11 standard series.

18. A communication apparatus configured to perform authentication using a first security method and authentication using a second security method, the communication apparatus comprising:
a communication unit configured to perform communication with another communication apparatus; and
a control unit configured to control authentication of the communication with the another communication apparatus,
wherein the control unit is configured to, in a state where the communication apparatus is capable of performing communication compliant with a first communication scheme and a second communication scheme of an IEEE 802.11 standard series, perform the authentication using the second security method based on a fact that the communication unit performs the communication compliant with the first communication scheme with the another communication apparatus, and perform the authentication using the first security method or the second security method based on a fact that the communication unit performs the communication compliant with the second communication scheme.

19. The communication apparatus according to Claim 18, further comprising a reception unit configured to receive an instruction to perform the communication compliant with the first communication scheme or the second communication scheme,
wherein a display unit is controlled so that the authentication using the second security method is performed based on issuance of an instruction by the reception unit to perform the communication compliant with the first communication scheme, and so that the authentication using the first security method or the second security method is performed based on issuance of an instruction to perform the communication compliant with the second communication scheme.

20. The communication apparatus according to Claim 18 or 19, wherein the first communication scheme is an IEEE 802.11be standard in the IEEE 802.11 standard series.

21. The communication apparatus according to Claim 12, 15, or 18, wherein the communication apparatus is configured to receive a frame containing information indicating that the authentication is performed using the second security method from the another communication apparatus.

22. The communication apparatus according to Claim 12, 15, or 18, wherein the communication apparatus is configured to, in a case where a frame containing information indicating that the authentication is performed using the second security method is not received from the another communication apparatus, perform control so that no connection is established with the another communication apparatus.

23. The communication apparatus according to Claim 12, 15, or 18, wherein the first security method is WPA or WPA2, and the second security method is WPA3.

24. A communication method of a communication apparatus configured to perform authentication using a WPA2 method and authentication using a WPA3 method, the communication method comprising:
establishing a link between the communication apparatus and another communication apparatus via a frequency channel; and
controlling authentication for performing communication with the another communication apparatus,
wherein the authentication is performed using the WPA3 method based on a fact that the communication with the another communication apparatus is performed with a plurality of links established, through the establishing, between the communication apparatus and the another communication apparatus.

25. A communication method of a communication apparatus configured to perform authentication using a WPA2 method and authentication using a WPA3 method, the communication apparatus being configured to operate as a communication access point, the communication method comprising:
performing communication with another communication apparatus configured to operate as a communication access point; and
controlling authentication of the communication with the another communication apparatus,
wherein the authentication using the WPA3 method is performed based on a fact that the communication apparatus and the another communication apparatus operate collaboratively.

26. A communication method of a communication apparatus configured to perform authentication using a WPA2 method and authentication using a WPA3 method, the communication method comprising:
performing communication with another communication apparatus; and
controlling authentication for performing the communication with the another communication apparatus,
wherein, in a state where the communication apparatus is capable of performing communication compliant with a first communication scheme and a second communication scheme of an IEEE 802.11 standard series, the authentication using the WPA3 method is performed based on a fact that the communication compliant with the first communication scheme is performed with the another communication apparatus.

27. A communication method of a communication apparatus configured to perform authentication using a first security method and authentication using a second security method, the communication method comprising:
establishing a link between the communication apparatus and another communication apparatus via a frequency channel; and
controlling authentication for performing communication with the another communication apparatus,
wherein, in the controlling, the authentication using the second security method is performed based on a fact that the communication with the another communication apparatus is performed with a plurality of links established, through the establishing, between the communication apparatus and the another communication apparatus, and the authentication is performed using the first security method or the second security method based on a fact that the communication with the another communication apparatus is performed with a single link established between the communication apparatus and the another communication apparatus.

28. A communication method of a communication apparatus configured to perform authentication using a first security method and authentication using a second security method, the communication apparatus being configured to operate as a communication access point, the communication method comprising:
performing communication with another communication apparatus configured to operate as a communication access point; and
controlling authentication for performing the communication with the another communication apparatus,
wherein, in the controlling, the authentication using the second security method is performed based on a fact that the communication apparatus and the another communication apparatus operate collaboratively, and the authentication is performed using the first security method or the second security method based on a fact that the communication apparatus and the another communication apparatus do not operate collaboratively.

29. A communication method of a communication apparatus configured to perform authentication using a first security method and authentication using a second security method, the communication method comprising:
performing communication with another communication apparatus; and
controlling authentication for performing the communication with the another communication apparatus,
wherein, in the controlling, in a state where the communication apparatus is capable of performing communication compliant with a first communication scheme and a second communication scheme of an IEEE 802.11 standard series, the authentication using the second security method is performed based on a fact that the communication compliant with the first communication scheme is performed with the another communication apparatus, and the authentication is performed using the first security method or the second security method based on a fact that the communication compliant with the second communication method is performed.

30. A program for causing a computer to function as the units of the communication apparatus according to any one of Claims 1, 4, 7, 12, 15, and 18.
